Europäisches Patentamt

European Patent Office

Office européen des brevets

(11) Publication number: **0 159 929**
**A2**

## EUROPEAN PATENT APPLICATION

(21) Application number: **85400582.4**

(22) Date of filing: **26.03.85**

(51) Int. Cl.⁴: **H 04 L 11/16**

(30) Priority: **11.04.84 US 599113**

(43) Date of publication of application: **30.10.85**
**Bulletin 85/44**

(84) Designated Contracting States: **DE FR GB IT NL**

(71) Applicant: **GRUMMAN AEROSPACE CORPORATION, South Oyster Bay Road, Bethpage, NY 11714 (US)**

(72) Inventor: **Avaneas, Napoleon G., 5 Lyn Oak Lane, Kings Park New York 11754 (US)**

(74) Representative: **Hirsch, Marc-Roger, 34 rue de Bassano, F-75008 Paris (FR)**

(54) **Hybrid high speed data bus.**

(57) A data communication bus having two paths, each one of which is reconditioned at every other port connected to the bus. Each coupler, connecting a corresponding port to the bus, permits one of the two paths to directly pass therethrough for continued data flow along the bus. The coupler also accomplishes a T-connection on this path to bring the data into the connected port. For the second path the coupler directs the data into the port where it becomes reconditioned before returning to the bus. The coupler thus permits each port to select data from either path and each port reconditions the data for transmission to a subsequent coupler. Data is normally accepted by the port from coupled data first arriving at the port. However, if a path has a fault, the port will still receive coupled data through the other path. This same port will recondition the received data and restore subsequent sections of the bus to normal dual path communication.

1

Title of the Invention:   HYBRID HIGH SPEED DATA BUS
Name of Inventor:   Napoleon G. Avaneas

### FIELD OF THE INVENTION

The present invention relates to a data bus
configuration and more particularly to a bus intended for
high speed data exchange among a large number of ports with
a high degree of reliability.

### BRIEF DESCRIPTION OF THE PRIOR ART

The accelerating progress of solid state computers and
related technologies has introduced requirements for high
and very high data rates and bandwidths on communication
data busses.  An additional requirement for communication
networks is the ability to connect a large number of ports
to the bus.  At the present time there are basically two
types of data busses which are used.  Each one has several
advantages and disadvantages.  In the first type there is a
hardwire (passive) bus configuration with a total absence of
active components on the path of the bus.  In the second
type active components are employed in the communicating
path of the bus, these components being capable of
reconditioning data along the signal transmission path of
the bus.  In the case of a passive bus, the advantages are
incident to the inherent reliability of hardwire systems.
Further, the lack of active components introduces no path
delays other than the normal signal propagation time through
the wires.  However, the utilization of a passive bus is
limited due to the fact that its bandwidth is progressively
reduced and the noise level increased as the number of ports
or stations becomes increased.

In order to solve this last-mentioned deficiency of the
passive bus, active bus configurations have been employed
because they permit high and very high communication
bandwidths with low noise; and a large number of ports may
be serviced.  The active bus simplifies the design of a network and reduces the cost of bus drivers since they have to drive much shorter bus paths and only a single port. Consequently, the simplified design reduces the cost of bus receivers because of the limited dynamic range of a received signal. A significant disadvantage of the active bus is encountered upon the occurrence of a failure of an active component which may be catastrophic for the entire bus operation. Also, additional delays in signal propagation are introduced by the intervention of active components.

## BRIEF DESCRIPTION OF THE PRESENT INVENTION

The present invention overcomes the disadvantages of passive busses and active busses by combining features of both. This is accomplished by employing two paths for signal communication, each one is alternatively reconditioned at every other port connected to the bus while passively reaching an intermediate port. Either the active or the passive path can be selected as a data input path by each port. Each port sends out data only through its active path. By having active reconditioning situated in this way, the present invention overcomes the main drawbacks of the two prior art bus configurations with only the slight disadvantage of an additional requirement that the transmitter for each port must drive a somewhat longer path including two succeedingly connected ports, instead of one. The present bus configuration may be realized for cable communication, fiber optics or microwave pipelines.

The present bus configuration is more reliable than those of the prior art because it permits uninterrupted bus operation even under adverse conditions including:

(1) single or multiple port failures (active component failures) with the exception of instances where two adjacent ports in the bus path fail simultaneously; and

(2) multiple cuts or shorts on both bus paths interconnecting the various ports with the exception of those cuts or shorts on both paths between two adjacent ports.

Although the present bus design introduces delays in signal propagation through the active components, the total bus delay due to the active components is half that of a prior art active bus with the same number of ports.

The above-mentioned objects and advantages of the present invention will be more clearly understood when considered in conjunction with the accompanying drawings in which:

## BRIEF DESCRIPTION OF THE FIGURES

FIG. 1 is a block diagram illustrating the utilization of the present bus configuration for unidirectional use and illustrating three ports connected to the bus.

FIG. 2 is a block diagram illustrating additional detail of active bus components with respect to a single port.

FIG. 3 is the logic diagram of a realization of the path switch control circuit as employed in FIG. 2.

FIG. 4 is a logic diagram of an output data selector as employed in FIG. 2 of the invention.

FIG. 5 is a block diagram of a bus configuration in accordance with the present invention for bidirectional use.

## DETAILED DESCRIPTION OF THE INVENTION

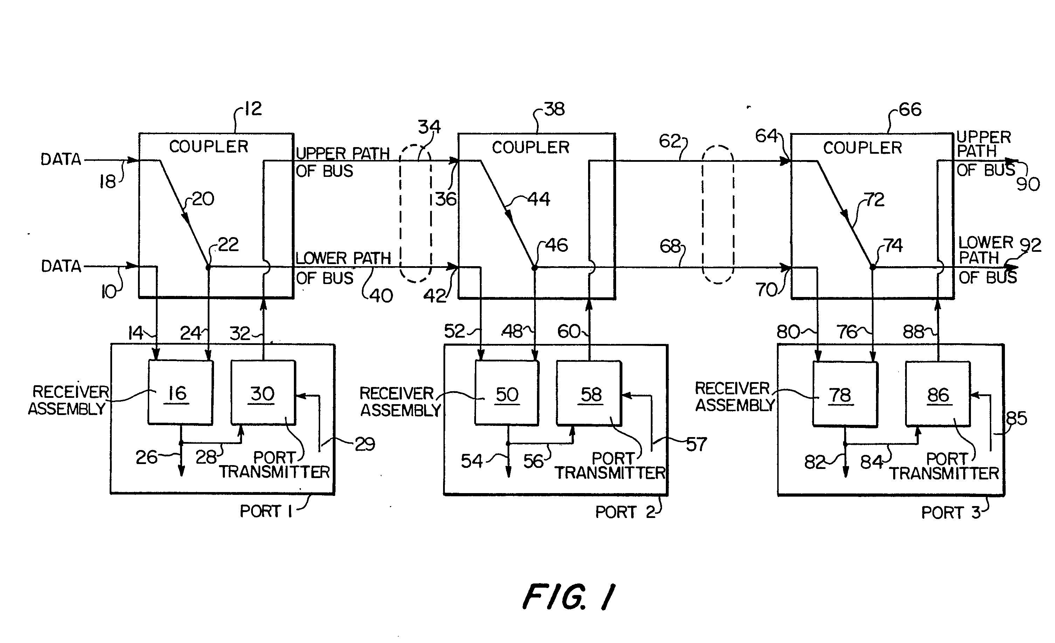

Referring to FIG. 1 the data bus may be generally characterized by an upper path and lower path as indicated. Typically, in the unidirectional form shown in FIG. 1, data will propagate along the bus from left to right allowing communication between the bus and a plurality of ports connected to the bus, indicated as port 1 through port 3. As should be appreciated, only three ports are illustrated for convenience sake and the invention is intended to be used with a much larger number of ports.

Considering data communication between the bus and port 1, a coupler 12 has first and second inputs 10 and 18 respectively connected along the lower bus path and upper bus path.

Data entering input 10 of coupler 12 is routed to input terminal 14 of port 1 where the data signal is received by a receiver assembly 16 for subsequent communication with an I/O device (not shown).

Identical data also enters coupler 12 from the second input 18 located along the upper path of the bus. The data at input 18 is then hardwire connected along wire 20 to junction point 22 where the signal is split. The first direction of the split signal is to input 24 of receiver assembly 16 which, under normal operating conditions, is capable of receiving data from either input 18 or 10. The second connection for data split at junction 22 is along wire 40 positioned along the lower path of the bus and so connected to input terminal 52 of a subsequent port, as will be discussed shortly.

Receiver assembly 16 will respond to data which appears first at either input 14 or input 24. That data will then be connected along an output wire 26 to an I/O device associated with the port. In addition, the data to which receiver assembly 16 responds will be reconditioned by inputting this data, along wire 28, to a port transmitter or driver 30 for further transmission to the upper bus path. When data is generated by an I/O device, it is connected to the transmitter 30, via wire 29, for transmission to the upper bus path. The connection to port transmitter 30 by wire 28 is a simplification of the actual structure, which will be explored in further detail hereinafter. Reconditioned data that appears at output terminal 32 of port 1 is connected to the upper path of the bus, along wire 34, for communication with ports 2 and 3, as will be discussed shortly.

Thus far explained, port 1 will receive data traveling down the bus from either input 10 or 18; and the receiver assembly 16 and port transmitter 30 cooperate to recondition the signal for connection to the upper path of the bus, where the data further communicates with succeedingly connected coupler 38 associated with port· 2 and coupler 66 associated with port 3, as illustrated in FIG. 1. Although the description of the invention is in terms of hardwire connections, it is to be understood that optical connections via fiber optics and microwave connections via wave guides are intended to be included.

Data reconditioned and transmitted along the upper bus path wire 34 is presented at input terminal 36 of the coupler 38. The hardwire connected data which has not undergone reconditioning at port 1 is present along lower bus path wire having input terminal 42 of coupler 38 defined therealong. As will be seen from a review of the structure of couplers 12, 38 and 66 as well as their respectively connected ports 1, 2 and 3, identical bus configurations are employed for the various ports of the network. As will be apparent by considering couplers 12, 38 and respectively connected ports 1 and 2, each time data is reconditioned, it is connected to the upper bus path at the output of a coupler; and each time data is coupled by hardwire, without active components which recondition the data, it becomes connected to the lower bus path.

The following will discuss the operation of the bus configuration as shown in FIG. 1. Since data propagation is faster through a hardwire connection as opposed to a connection including reconditioning by active components, data transmission through coupler 38 will be faster at input 36 than input 42 due to the interposed active components including receiver assembly 50, port transmitter 58, and input wire 56, connected in the data path to terminal 42. Accordingly, the data will appear at the lower bus path wire 68 before it appears along the upper bus path wire 62. However, the data propagating along the lower bus path wire 68 is then forced to undergo reconditioning when the data appears at coupler input terminal 70, port input terminal 80, receiver assembly 78, wire 84, port transmitter 86 and output terminal 88. Data to an I/O device is transmitted thereto along wire 82.

On the other hand, the data which has undergone reconditioning at port 2 is outputted at terminal 60 and transmitted along the upper bus path wire 62 for connection to input terminal 64 of coupler 66. The reconditioned data along upper bus path wire 62 then undergoes no delay as it is connected through wire 72, junction 74, input terminal 76, and lower bus path wire 92. Accordingly, the data will normally alternate between the upper bus path and the lower bus path wherein it encounters reconditioning at every other port. This reduces, by almost 50 percent, the signal propagation delay through a bus configuration which has active reconditioning components at each port while maintaining good bandwidth with low noise thereby accomplishing the advantages over the prior art as previously set forth.

Of course, the preceding discussion of operation assumes no faults in the bus paths. The following discussion will explore the capability of the present invention to ensure communication along an entire network, even in the event of faults. Regardless of whether a break occurs along an upper bus path or lower bus path wire, a succeeding port and its associated coupler will ensure that data from the operative bus path is transmitted to a subsequent coupler and corresponding port, resulting in the reformation of data on both the upper and lower bus paths for succeeding couplers.

For example, if a break were to occur along the upper bus path leading to input terminal 18, data would still be present along the lower bus path at input terminal 10 of coupler 12. The receiver assembly 16 and port transmitter 30 recondition the data from input terminal 30 and transmit it, via port output terminal 32, to the upper bus path wire 34. The data then undergoes a hardwire connection via wire 44 and junction 46 to the lower bus path wire 68 and from there to coupler 66. Simultaneous with this operation the reconditioned signal at junction point 46 undergoes a parallel connection to the receiver assembly 50 of port 2, via terminal 48, and exits at port output terminal 60 for transmission to the upper bus path wire 62. Thus, notwithstanding the fault along the upper bus path leading to input terminal 18, the data is again present on both upper and lower bus paths at the inputs of coupler 66. From this point on the remaining network will see the data on both bus paths in a normal manner. Of course, I/O devices connected to each receiving assembly will be able to communicate with the bus through the operating bus paths.

Assuming that the lower bus path is open in the vicinity of input terminal 10, data will still be received by port 1 via input terminal 18, wire 20, junction point 22 and input terminal 24. At the output of port 1, the lower bus path wire 40 will transmit data due to its parallel connection to junction point 22. The data received at terminal 24 of port 1 will undergo reconditioning and, after exiting from output terminal 32, will be transmitted to the upper bus path wire 34. As a result the data is again present on the upper and lower bus paths, in this case prior to the inputs of coupler 38.

Considering another fault condition involving an active component such as receiver assembly 16 or port transmitter 30, data transmission along the bus will not be impeded. This is due to the hardwire (passive) connection between input terminal 18, wire 20, junction point 22 and the lower bus path wire 40. Once data from this bus path wire is received at input terminal 42, the signal is reconditioned and transmitted to upper bus path wire 62. The presence of the data at input terminal 64 will result in the coupling of the data to both upper and lower bus path wires 90 and 92 thereby restoring normal network communication.

The bus configuration is therefore capable of always handling single or, in most cases, multiple port failures with the exception of those instances where there are failures in two adjacent ports along the bus. Likewise, multiple failures along the paths are handled by the present design with the exception of those instances where there are path faults along both the upper and lower bus paths between adjacent ports. Although the active components in a port, such as those associated with receiver assembly 16 and port transmitter 30, introduce delays in signal propagation, the total bus delay due to these active components is half that of a bus configuration wherein the data undergoes reconditioning by active components at each port.

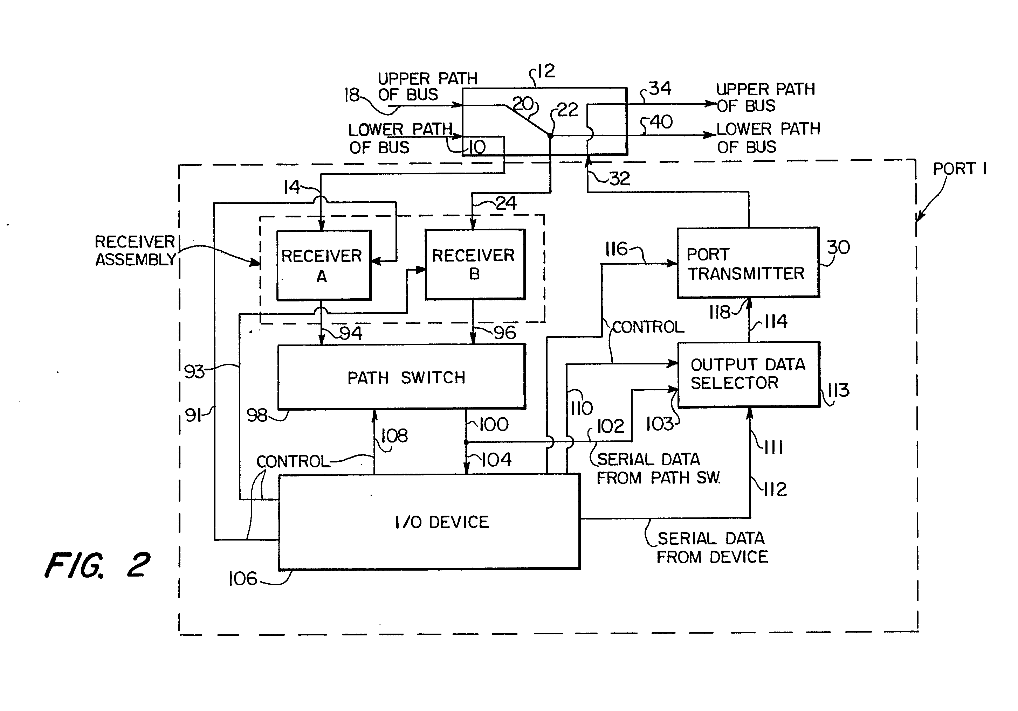

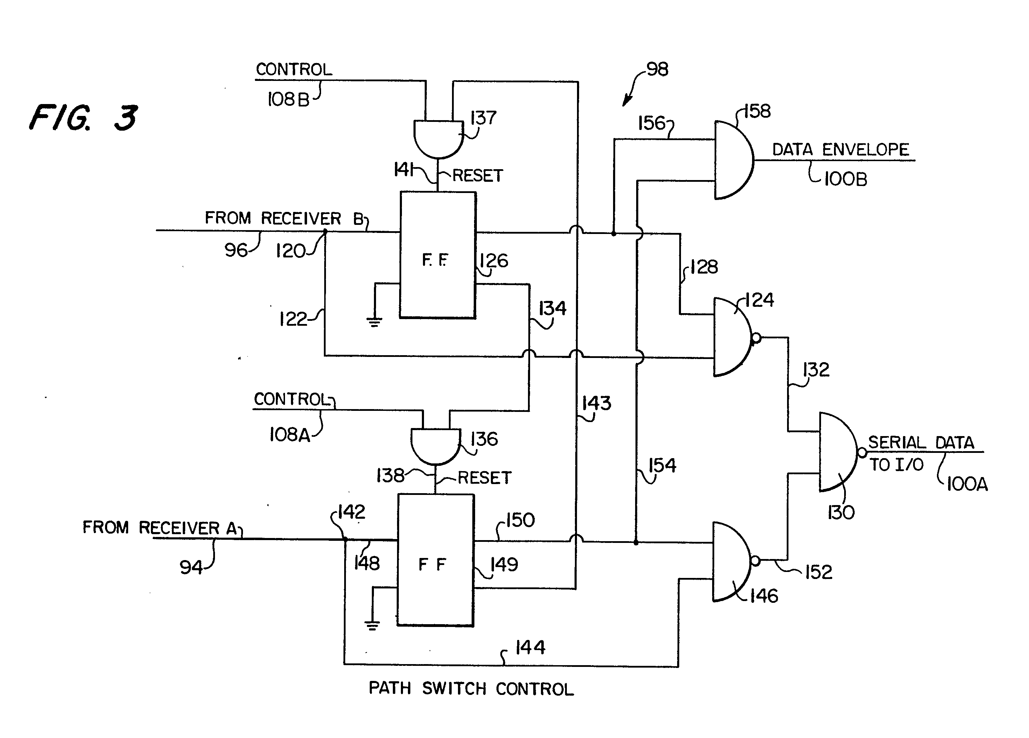

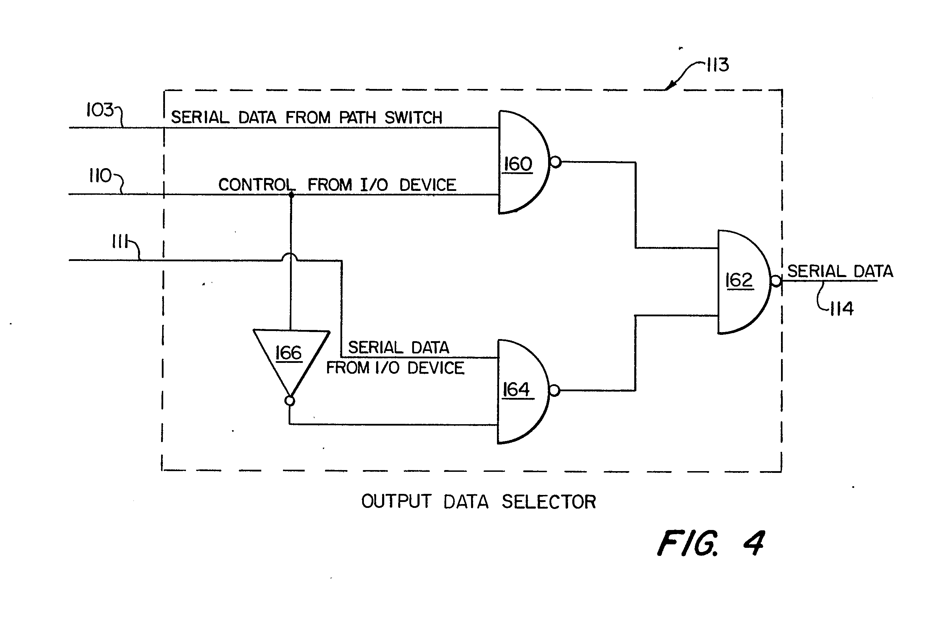

FIG. 2 illustrates the block diagram components within a particular port with greater specificity. The receiver assembly 16, previously discussed in connection with FIG. 1, is actually seen to include receivers A and B. In actuality, each of these receivers may simply be a gate. An I/O device 106 has control lines 91 and 93, respectively connected to receivers A and B for inhibiting communication between the bus and the port until the device is ready to communicate. It should be understood that the present invention is directed to a bus design and the particular type of I/O device is not, per se, part of the invention. The outputs 94 and 96 of receivers A and B are respectively connected to a path switch 98 having a logic construction to be discussed in connection with FIG. 3. Data from either receiver A or B will appear at the output terminal 100 of the switch and from there to the input data terminal 104 of the I/O device 106. Operation of the switch is governed by control signals appearing along path switch control lines 108 connected to the I/O device and necessary to accomplish communication between the receivers and the I/O device. Reconditioned data is connected from output terminal 100 of the path switch 98 to connecting wire 102 and then to input terminal 103 of an output data selector 113 having circuit structure to be discussed hereinafter in connection with FIG. 4. In the event the I/O device is ready to transmit its own data to the bus, it may do so along device output wire 112, connected to input terminal 111 of the selector 113. The I/O device 106 generates control signals along path 110 for determining whether reconditioned serial data from the bus or serial output data from the device is to be selected. The output 114 from selector 113 is connected to input terminal 118 of port transmitter 30 and when a control signal along wire 116 is present, the selected data is transmitted to the output terminal 32 of the port.

FIG. 3 illustrates a logic diagram of the path switch previously indicated by reference numeral 98 in FIG. 2. Data from receiver B and present at its output 96 becomes split at junction point 120. A first circuit path includes wire 122 connected to the lower terminal of gate 124. The second connection from junction point 120 is to the upper input terminal of flip-flop 126 which, when set, furnishes gate 124 with a control signal along line 128 connected to the upper terminal of the gate permitting, for each bit of data present at point 120, a corresponding bit to be transmitted along path 132 for introduction to the upper input terminal of gate 130. The output from receiver A, present at its output 94, undergoes, at succeeding points, a similar logic operation as just discussed in connection with the data from receiver B. Data from receiver A is split at junction point 142 and is fed along wire 148 to the input of flip-flop 149 and simultaneously along wire 144 to the lower input terminal of gate 146. Upon setting flip-flop 149 a control signal becomes present along wire 150 which is connected to the upper input terminal of gate 146 permitting, for each bit of data present at point 142, a corresponding bit to be transmitted along path 152 to the lower input of gate 130.

During usual operation of the path switch of FIG. 3, if the data from receiver B is arriving first, this causes flip-flop 126 to set. A signal along wire 134 is transmitted to gate 136 connected in series with the reset terminal of flip-flop 126 to inhibit the response by flip-flop 149 to a subsequently received identical data signal from receiver A. In the event data from receiver A is received by the path switch first, it is responded to by flip-flop 149, a set signal will appear along wire 143 for connection to gate 137 and series connected reset terminal 141 of flip-flop 126, to inhibit response by flip-flop 126 to any subsequently received identical data from receiver B. After a communication cycle has terminated control lines 108A and 108B are energized; and via respective gates 138 and 137, they reset flip-flops 149 and 126 thereby terminating their operation until a new communication cycle with the involved port occurs.  The serial data processed by the path switch will appear on line 100A, at the output of gate 130.  A data envelope gate 158 having input wires 154 and 156 respectively connected to the outputs of flip-flops 149 and 126, generates a data envelope during the interval of serial data generation on wire 100B.  The serial data and the data envelope signal are necessary for proper communication with a typical I/O device.

FIG. 4 illustrates a logic diagram for the output data selector 113 shown in FIG. 2.  Input terminal 103 carries serial data from the path switch to the top input terminal of gate 160.  The control signal from the I/O device appears along wire 110 for connection to the bottom input terminal of gate 160 which gates reconditioned data to the top input terminal of gate 162 for transmission to the output wire 114 of the output data selector.  If data is to be transmitted to the bus from an I/O device, such serial data will be present at the input terminal 111 for transmission to the top input terminal of gate 164.  The control signal from the I/O device, present along wire 110 is transmitted, via inverter 166, to gate 164, the output of gate 164 being connected to the lower terminal of gate 162.  Accordingly, if serial data is flowing from the path switch, gate 160 is enabled and, due to inverter 166, gate 164 is disabled.  The converse situation arises in the event that serial data is transmitted from the I/O device.

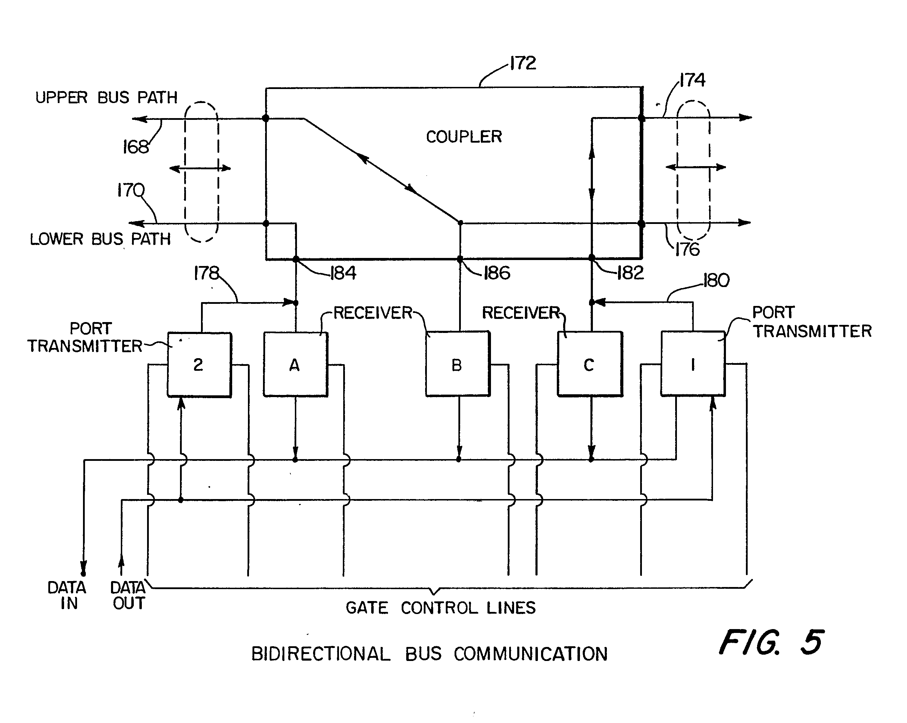

An enhancement of the invention as described is shown in FIG. 5 wherein bidirectional communication is possible. The receivers and transmitters are again fabricated from simple gates, and in the bidirectional form an additional receiver C is connected via wire 180 to coupler terminal 182. Additionally, a second port transmitter is connected via wire 178 to coupler terminal 184. Thus, at both coupler terminals 182, 184, data may be transmitted or received while coupler terminal 186 is only connected to the input terminal of receiver B. Data flow is inhibited through the transmitters and receivers by the gate control lines as explained in connection with FIG. 2.

When connected as shown in FIG. 5, the bus wires 168 and 170 will carry bidirectional data between coupler 172 and a preceding port, while similar bidirectional communication will occur on bus wires 174 and 176, connected between coupler 172 and a succeedingly connected port.

The present invention can work as a linear bus, as a ring, or as any other appropriate configuration bus. An extension of the present approach to three, four or more paths is also possible. In this case, each path should be reconditioned every three, four, etc., ports. It is also possible for every port to input data from all paths, or can output data only from the path terminated at the port and from another one or more paths. The selection of the additional paths must be based upon a symmetrical approach. It is also possible for the paths of the bus structure to be bundled together in the same cable or they can be routed at a distance from each other.

It should be understood that the invention is not limited to the exact details of construction shown and described herein for obvious modifications will occur to persons skilled in the art.

I CLAIM:

1.  A data communication bus comprising:

a plurality of coupling means for connecting at least two communication paths to a plurality of coupled ports;

means for connecting a first coupling means input, defined along a first path, to a junction point within the coupling means;

means connecting a second coupling means input, defined along a second path, to a first input of a corresponding port for transferring data thereto;

means connecting the junction point to a second input of the port;

means located in the port for reconditioning the data received therein;

means connecting an output of the port to the first input of a succeedingly connected coupling means, defined along the first path of the bus;

means parallel connecting the junction point to a second input of the succeedingly connected coupling means;

wherein each port operates upon the data first appearing at the inputs thereof and further wherein the data propagating along the bus is reconditioned at every other port connected to the bus.

2.  The bus set forth in claim 1 wherein the reconditioning means comprises:

a receiver assembly having two inputs respectively connected to the first and second port inputs; and

means connected in circuit with the output of the receiver assembly for transmitting the reconditioned data to the first input of the succeedingly connected coupling means.

3.  The bus set forth in claim 2 wherein the receiver assembly comprises:

a first receiver connected to the first port input;

a second receiver connected to the second port input;

the first and second receivers each having an output, wherein one or the other receiver transmits data therethrough, depending upon which receiver first receives data from the coupling means.

4. The bus set forth in claim 3 together with a path switch having first and second inputs thereof respectively connected to the receiver outputs for switching data from the receiver first receiving data to an I/O device connected to the path switch.

5. The bus set forth in claim 4 together with means connected to the path switch and an I/O device for selecting data from either and providing the selected data to the transmitting means.

6. The bus set forth in claim 4 wherein the path switch comprises:

first means connected at its input to the data transmitted from the second receiver for switching data from the first path therethrough during normal operation of the bus;

second means connected at its input to the data transmitted from the first receiver, via a delay, for switching data from the second path therethrough in the event of a fault in the first path;

first means connected to the first and second switching means for gating data received from one of the switching means therethrough; and

second gating means connected to the first and second switching means for generating a data envelope corresponding to the data gated through the first gating means.

7. The bus set forth in claim 5 wherein the means for selecting data comprises:

gating means connected to the path switch and the I/O device for gating data from either to the transmitting means.

8. A data communication bus comprising:

a plurality of coupling means for connecting at least two communication paths to a plurality of coupled ports;

means for connecting a first terminal of a coupling means defined along a first path to a junction point;

means connecting a second terminal of the coupling means defined along a second path to a first connection terminal of a corresponding port for transferring data thereto;

means connecting the junction point to a second connection terminal of the port;

a receiver assembly having two inputs respectively connected to the first and second terminals of the port;

means connected in circuit to the output of the receiver assembly for transmitting reconditioned data to a third connection terminal of the port;

means connecting the third port terminal to the first input of a succeedingly connected port defined along the first path of the bus;

wherein each port operates upon the data first appearing at the inputs thereof.

9. The data communication bus set forth in claim 8 wherein the receiver assembly comprises:

a first receiver connected to the first terminal of the port and

a second receiver connected to the second terminal of the port, the first and second receivers having respective outputs, the data appearing at the output of the receiver first receiving data from the coupling means;

a third receiver having its output terminal connected to the third terminal of the port; and

a second transmitter having its output connected to the first terminal of the port;

whereby the receivers and transmitters effect bidirectional data communication between succeeding coupling means along the bus.

10. A method for communicating data along a bus comprising the steps:

establishing two paths of data communication;

connecting a plurality of couplers along the paths;

connecting a port to each of the couplers;

cohnecting a bypass, through a coupler, between the first path at the input of the coupler and the second path at the input of a succeedingly connected coupler;

communicating data from the first and second paths to the port for reconditioning of the data;

transmitting reconditioned data from the port to the first path at the input of a succeedingly connected coupler;

whereby, during normal data communication, the data along a particular path is reconditioned at every other port;

and further whereby each port has access to data on both paths thereby permitting completed communication with a port in the event a fault exists in one of the paths immediately preceding a coupler.

FIG. 1

FIG. 2

FIG. 3

113

103 — SERIAL DATA FROM PATH SWITCH

110 — CONTROL FROM I/O DEVICE

111 — SERIAL DATA FROM I/O DEVICE

160

162

164

166

114 — SERIAL DATA

OUTPUT DATA SELECTOR

*FIG. 4*

FIG. 5

BIDIRECTIONAL BUS COMMUNICATION